Europäisches Patentamt

European Patent Office (11) Numéro de publication: **0 125 944**

Office européen des brevets **B1**

(12) **FASCICULE DE BREVET EUROPÉEN**

(45) Date de publication du fascicule du brevet:
08.03.89

(21) Numéro de dépôt: **84400687.4**

(22) Date de dépôt: **07.07.81**

(51) Int. Cl.⁴: **F 25 B 5/00, F 25 B 49/00**

(54) Ensemble frigorifique à compartimets à températures différentes.

(30) Priorité: **11.07.80 FR 8015495**

(43) Date de publication de la demande:
**21.11.84 Bulletin 84/47**

(45) Mention de la délivrance du brevet:
**08.03.89 Bulletin 89/10**

(84) Etats contractants désignés:
**AT BE CH DE FR GB IT LI NL SE**

(56) Documents cité:
**DE-A-2 035 207**
**DE-C-723 170**
**FR-A-804 113**
**FR-A-893 120**
**FR-A-1 025 695**
**FR-A-1 068 697**
**US-A-2 133 955**
**US-A-2 145 777**

(73) Titulaire: **SOCIETE D'ELECTROMENAGER DU NORD SELNOR, Avenue des Sports, F-59810 Lesquin (FR)**

(72) Inventeur: **Quesnoit, Jacques, THOMSON- CSF SCPI 173, bld. Haussmann, F-75379 Paris Cedex 08 (FR)**

(74) Mandataire: **Phan, Chi Quy, THOMSON- CSF SCPI 19, avenue de Messine, F-75008 Paris (FR)**

LIBER, STOCKHOLM 1989

## Description

La présente invention concerne un ensemble frigorifique à compartiments à températures différentes.

Cet ensemble frigorifique se présente habituellement sous forme d'un réfrigérateur, d'un congélateur, d'un meuble frigorifique ou d'une chambre frigorifique. Le cas le plus fréquemment rencontré est un ensemble frigorifique sous forme d'un réfrigérateur à deux compartiments maintenus respectivement à des températures relativement constantes par deux évaporateurs à températures différentes. L'un de ces compartiments est appelé compartiment de réfrigération, généralement maintenu à +5°C environ, et l'autre est un compartiment de congélation maintenu à -18°C approximativement.

La plupart des réfrigérateurs connus de ce type fonctionnent avec un seul compresseur assurant le refroidissement de deux évaporateurs mis en série dans le circuit. La répartition du froid entre les deux compartiments est, dans ce cas, fixée par construction et ne peut donc s'adapter exactement aux besoins. La répartition des besoins entre les compartiments varie en effet d'une part en fonction de l'usage (ouvertures de porte, introduction de produits à refroidir ou à congeler) et d'autre part en fonction de la température ambiante. Lorsque la température ambiante se refroidit, on ne fait plus assez de froid dans le compartiment basse température et on n'obtient donc plus le -18° requis. Pour y parvenir on peut soit réchauffer le compartiment réfrigérateur au moyen d'une résistance, soit prévoir des compartiments équilibrés correctement aux températures respectives de -18°C et +5°C par exemple à la température ambiante la plus basse de +16°C par exemple mais alors à la température ambiante la plus élevée de +32°C par exemple, on aura des températures respectives de -23°C et 5°C. Ces deux solutions (résistance ou balance thermique plus froide) entraînent un surcroît de consommation d'énergie. De plus on n'obtient de performances satisfaisantes que dans une plage de température limitée, et pour des valeurs de volume du compartiment basse température limitées en valeur relative à environ 25 % du volume total et en valeur maximale à une capacité de l'ordre de 100 litres.

Egalement, on refroidit les deux compartiments en évaporant le fluide frigorigène à la température requise pour le compartiment le plus froid ce qui ne donne pas le meilleur rendement.

D'autres appareils sont équipés de deux compresseurs qui fournissent du froid respectivement à deux évaporateurs. Cette solution permet d'obtenir des performances satisfaisantes dans les deux compartiments indépendamment du rapport de leurs volumes et de donner à l'utilisateur la possibilité de régler séparément les deux compartiments. Mais cette solution s'avère nettement plus coûteuse. Ces appareils consomment au moins autant d'énergie que ceux du cas rappelé dans les paragraphes précédents car les pertes fixes de deux compresseurs bien qu'ils soient relativement plus petits doivent être additionnées.

De nombreuses solutions ont été envisagées pour assurer l'indépendance de fonctionnement de ces deux compartiments dans un appareil équipé avec un seul compresseur. La plupart de ces solutions utilisent une électro-vanne permettant d'arrêter le refroidissement d'un évaporateur, généralement celui du compartiment de réfrigération, tout en continuant de refroidir l'autre compartiment. Mais on n'obtient pas réellement l'indépendance de réglage et la stabilité des températures souhaités car les conditions de fonctionnement du circuit frigorifique sont très différentes selon que l'on assure le refroidissement d'un seul évaporateur ou des deux et on ne s'approche du résultat recherché qu'en utilisant une régulation plus élaborée et sensiblement plus coûteuse.

Dans certaines autres solutions est utilisé un circuit secondaire pour le refroidissement du compartiment réfrigérateur. Ce circuit est en liaison thermique avec l'évaporateur du compartiment basse température. On commande l'échange dans ce circuit au moyen d'une électro-vanne ou d'un étranglement que l'on réchauffe lorsque l'on veut arrêter la circulation du fluide.

Ces solutions ne permettent pas d'assurer dans un appareil l'indépendance réelle des compartiments comme cela est obtenu avec deux compresseurs et deux circuits indépendants, indépendance qui permet essentiellement d'obtenir les températures nécessaires avec des réglages indépendants, et de mettre le compartiment basse température en marche continue pour sous-refroidir les produits en conservation, et améliorer la congélation.

De plus, l'appareil reste toujours dans l'obligation de fonctionner à une température d'évaporation correspondant aux besoins du compartiment le plus froid, donc avec un rendement thermodynamique médiocre.

Un appareil frigorifique du type à électro-vanne est décrit dans le document FR-A-893 120 et comprend, en regard de la figure 2, une horloge à contacts 24 qui est constamment alimentée de sorte qu'elle place alternativement l'électrovanne dans une position telle qu'elle autorise le passage du fluide vers l'un ou l'autre des compartiments, à condition que simultanément le thermostat correspondant audit compartiment détecte la nécessité d'un apport de froid dans le compartiment considéré et, en conséquence, ferme la portion du circuit électrique dans lequel il se trouve, entre l'horloge à contacts et l'électro-vanne. En effet, chaque contact de sortie de l'horloge est en série avec le thermostat, ou un contact du thermostat et, qui est fermé quand le compartiment correspondant nécessite un apport de froid, et avec l'électroaimant 20 ou 21 correspondant.

Une telle structure présente des inconvénients car elle peut être à l'origine de surcharges thermiques temporaires. En effet, il peut arriver qu'un compartiment A soit trop chaud, l'autre B étant à une température correcte et que, simultanément, l'horloge soit dans une position telle que son contact associé au compartiment B soit fermé. Dans ce cas, le thermostat 22 associé au compartiment B est ouvert, l'entrée 23 associée au compartiment A étant fermée, alors que le second contact de l'horloge associé au compartiment A est ouvert, de sorte que le compresseur 18 ne peut être alimenté et, en consequence, aucun compartiment ne peut recevoir du froid.

Il en résulte que le compartiment le plus chaud A se réchauffe encore tant que l'horloge n'a pas atteint la phase de son cycle dans laquelle le contact associé à ce compartiment A se referme, ce qui ouvre le contact associé au compartiment B.

Le but de la présente invention est donc de réaliser un ensemble frigorifique à compartiments à températures différentes muni d'un seul moto-compresseur qui ne présente pas les inconvénients précités, notamment ceux présentés par l'appareil frigorifique du document FR-A-893 120.

L'invention se rapporte ainsi à un ensemble frigorifique à compartiments à températures différentes contrôlées par des dispositifs thermostatiques indépendants, refroidis par un circuit frigorifique muni d'un seul moto-compresseur avec deux évaporateurs, un pour chaque compartiment, et d'une électro-vanne qui, si elle se trouve dans un premier état (ouverte), assure le fonctionnement de l'évaporateur du premier compartiment et si elle est dans un second état (fermé), assure le fonctionnement du seul évaporateur du second compartiment, caractérisé en ce qu'il comporte un cycleur de commande de l'électrovanne monté de façon telle qu'il fonctionne exclusivement lorsque simultanément les températures des deux compartiments est en surcharge thermique, c'est-à-dire lorsque la durée de maintien de ce compartiment à température trop élevée dépasse un temps prédéterminé, et que l'électrovanne soit alternativement ouverte et fermée afin que les évaporateurs des premier et second compartiments fonctionnent alternativement et qu'ainsi ces compartiments soient refroidis simultanément.

Par rapport à l'appareil frigorifique de l'art antérieur, l'invention permet ainsi que le refroidissement en alternance des deux compartiments A et B ne puisse avoir lieu que si deux conditions sont remplies, l'une que les deux compartiments sont trop chauds simultanément, et l'autre que l'un des compartiments est en surcharge thermique.

Pour mieux faire comprendre l'invention on décrit ci-après un certain nombre d'exemples de réalisation illustrés par des dessins ci-annexés dont:

- la figure 1 représente une vue schématique d'un exemple de réalisation d'un ensemble frigorifique de l'invention, sous forme d'un réfrigérateur à deux compartiments à deux températures, et

- la figure 2 représente un schéma d'un circuit électrique de commande de régulation de températures des compartiments de l'ensemble frigorifique de l'exemple de la figure 1.

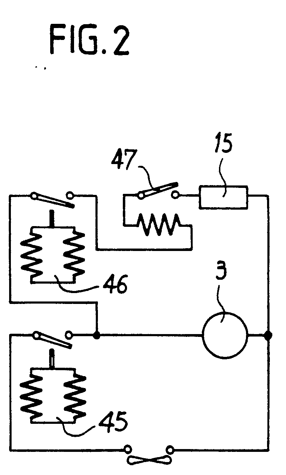

Un ensemble frigorifique 1 selon l'invention comprend plusieurs compartiments c'est-à-dire deux compartiments au moins à temperatures différentes. Dans un tel ensemble, le maintien des températures des compartiments est effectué par un circuit frigorifique équipé d'un seul motocompresseur 3 et la régulation de températures des compartiments de manière à obtenir des valeurs relativement constantes est assurée par un circuit électrique 4 (figure 2). Le circuit frigorifique 2 comprend au moins deux parties constituées par des circuits fermés distincts, renfermant des fluides frigorigènes, une première partie appelée circuit primaire, et une deuxième partie dite circuit secondaire. Le circuit primaire comprend plusieurs dispositifs d'évaporation. Le nombre de ces dispositifs d'évaporation correspond au nombre de compartiments de l'ensemble frigorifique 1. Le circuit secondaire est constitué d'un serpentin distinct du circuit primaire et dont une partie joue le rôle d'un évaporateur et une partie en contact d'échange thermique avec l'un de ces dispositifs d'évaporation du circuit primaire qui joue le rôle d'un échangeur thermique. Le circuit secondaire renferme un fluide frigorigène, permettant d'assurer l'échange entre les deux parties de ce circuit secondaire. Le circuit secondaire fonctionne en circulation par gravité ou thermosiphon du fluide frigorigène et assure un transfert du froid de sa partie en liaison thermique avec cet échangeur thermique à sa partie jouant le rôle d'un évaporateur disposé dans un des compartiments de l'ensemble frigorifique 1. L'échangeur thermique est situé au-dessus de la partie du circuit secondaire jouant le rôle d'évaporateur. Lorsque l'échangeur thermique est plus froid que cette partie du circuit secondaire jouant le rôle d'évaporateur, les vapeurs de fluide frigorigène se trouvant dans la partie du circuit secondaire en contact d'échange thermique avec cet échangeur thermique se condensent et le fluide frigorigène liquide formé redescend dans la partie du circuit secondaire jouant le rôle d'évaporateur où il s'évapore et donne du froid. Un transfert thermique est ainsi réalisé. Par contre lorsque la partie du circuit secondaire jouant le rôle d'évaporateur est plus froid que cet échangeur thermique, le fluide frigorigène liquide reste dans cette partie de ce circuit secondaire, la vapeur du fluide ayant une pression trop basse pour se condenser dans l'échangeur thermique. On a donc une valve thermique qui permet dans un ensemble frigorifique 1, à un compartiment de recevoir des frigories sans les restituer à l'autre compartiment lorsque le fonctionnement est inversé. Dans le fonctionnement de cet ensemble frigorifique 1, le circuit primaire du circuit frigorifique 2 refroidit alternativement des dispositifs d'évaporation lesquels jouent chacun un rôle prédéterminé, soit celui d'un évaporateur soit celui d'un échangeur thermique pour un circuit secondaire. Le dispositif d'évaporation du circuit primaire et la partie du circuit secondaire, qui jouent le rôle d'un évaporateur, sont disposés respectivement dans les compartiments de l'ensemble frigorifique 1 pour assurer leur refroidissement.

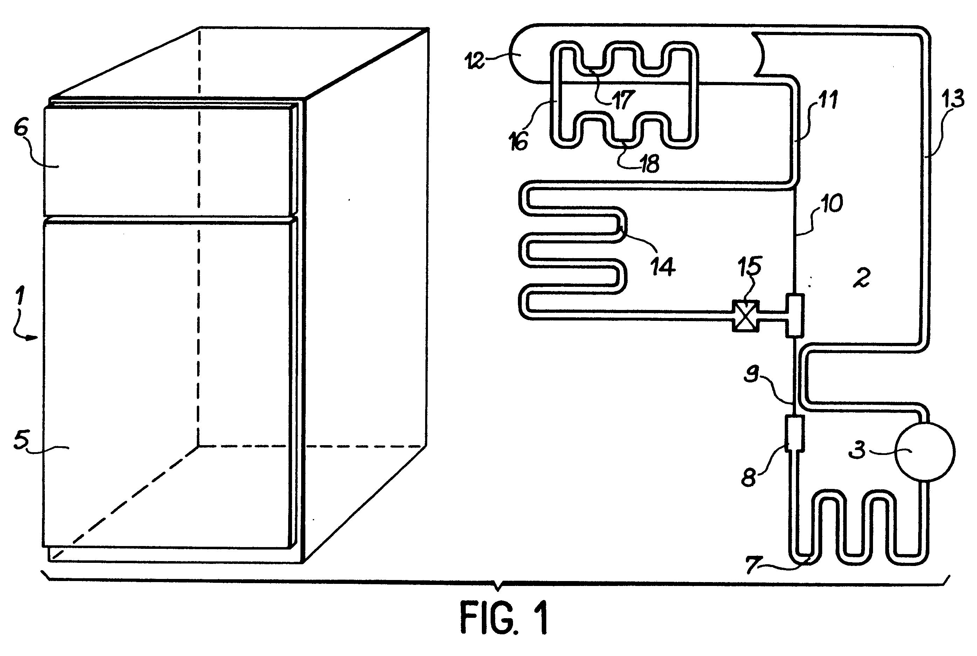

Dans l'exemple illustré dans la figure 1, l'ensemble frigorifique 1 comprend deux compartiments à températures différentes: un compartiment 5 à une température de l'ordre de +5°C appelé compartiment de réfrigération et un compartiment 6 à une température de l'ordre de -18°C appelé compartiment de congélation. Le circuit frigorifique 2 de cet ensemble frigorifique 1 comprend un circuit primaire ayant d'une part en série un motocompresseur 3, un condenseur 7, un filtre-déshydrateur 8, un capillaire principal 9, un capillaire auxiliaire 10, une conduite de liaison 11, un premier dispositif d'évaporation sous forme d'un réservoir jouant le rôle d'un échangeur thermique 12 et une conduite 13 de retour au motocompresseur 3 et d'autre part à la sortie du capillaire principal 9, un deuxième dispositif d'évaporation se présentant sous la forme et jouant le rôle d'un évaporateur 14, monté en parallèle sur le capillaire auxiliaire 10, et un dispositif de blocage constitué par une électrovanne 15 montée à l'entrée de ce deuxième dispositif d'évaporation.

Le circuit frigorifique 2 comprend en outre un circuit secondaire 16 formant un circuit distinct du circuit primaire. Le circuit secondaire 16 comprend une partie 17 pénétrant à l'intérieur de l'échangeur thermique 12 pour avoir un contact intime d'échange thermique avec le fluide frigorigène du circuit primaire, et une partie jouant le rôle d'un évaporateur 18 du compartiment de congélation 6. Ce circuit secondaire 16 est revendiqué dans la demande initiale EP-A-0 044 248 dont la présente demande est une division.

Au cours du fonctionnement de l'ensemble frigorifique 1, lorsque l'électrovanne 15 du circuit primaire est ouverte, le fluide frigorigène liquide passe dans l'évaporateur 14 où il s'évapore à une température de -10° à -15°C par exemple. Le fluide frigorigène liquide excédentaire s'il y en a, arrive à l'échangeur thermique 12, mais il ne peut transférer de frigories à l'évaporateur 18 car celui-ci est à une température plus basse de -18°C par exemple. Le débit dans le capillaire auxiliaire 10 est pratiquement nul, car la perte de charge qu'il occasionne est beaucoup plus importante que celle à travers l'évaporateur 14. La température d'évaporation de -10° à -15°C dans l'évaporateur 14 résulte de l'équilibre thermique obtenu dans le compartiment réfrigérateur dont la température est normalement de +5°C avec un évaporateur échangeur 14 de grande surface ainsi que du débit du capillaire principal 9.

Lorsque l'électrovanne 15 est fermée, l'évaporateur 14 n'est plus alimenté et le fluide frigorigène liquide passe par le capillaire auxiliaire 10. Le circuit fonctionne donc avec les deux capillaires 9 et 10 en série, adaptés à une température d'évaporation plus basse que lorsque l'on n'a le freinage que du seul capillaire 9. On obtient ainsi, une température d'évaporation de -25°C par exemple, dans l'échangeur thermique 12 qui permet de refroidir le compartiment de congélation à -18°C par exemple, au moyen du circuit secondaire 16 et de son évaporateur 18.

On voit donc que dans l'ensemble frigorifique illustré, le fonctionnement peut être ainsi intégralement en alternat pour produire du froid dans chaque évaporateur à une temperature d'évaporation optimale pour ses caractéristiques propres de fonctionnement, le réglage de chaque compartiment peut être fait sans influer sensiblement sur le réglage de l'autre, le compresseur peut être mis en marche continue en fournissant le maximum de froid dans le compartiment de congélation, tout en maintenant une température convenable et réglable dans l'autre compartiment. On peut aussi arrêter le compartiment le moins froid et faire fonctionner l'autre à une température désirée.

Selon l'invention, le circuit frigorifique 2 comprend dans son circuit primaire deux dispositifs d'évaporation. En régime établi, le dispositif d'évaporation 14 du compartiment à +5°C évapore à une température plus élevée de -10° à -15°C par exemple, le dispositif d'évaporation jouant le rôle d'échangeur thermique 12 évapore à une température plus basse de -20° à -30°C par exemple. Le circuit secondaire 16 évapore à une température de -15° à -25°C par exemple.

Dans l'ensemble frigorifique de l'invention l'alternat de la production du froid par ce circuit frigorifique est réglé au moyen de thermostats pour maintenir d'une manière relativement constante les températures des compartiments.

Dans le cas d'un ensemble frigorifique 1 à deux compartiments de l'exemple illustré dans la figure 1, la régulation des températures de ces deux compartiments peut être effectuée au moyen de deux thermostats dont les éléments sensibles sont en contact thermique respectivement avec les évaporateurs de ces compartiments. Un circuit électrique 4 de commande de l'alternat de production de froid dans les compartiments de l'ensemble frigorifique 1 est schématiquement illustré comme exemple dans la figure 2.

Ce circuit électrique comprend deux parties. La première partie comprend un thermostat 45 du compartiment de congélation 6 monté en série avec le motocompresseur 3 aux bornes d'une source électrique. La deuxième partie comprend un ensemble ayant en série un thermostat 46 du compartiment de réfrigération 5, un cycleur 47 constitué par un interrupteur dont l'ouverture à effet retardé est commandée par le courant traversant ce cycleur, et l'électrovanne 15, monté en parallèle aux bornes du motocompresseur 3. Ce cycleur 47 peut être constitué par un interrupteur à bilame, à résistance chauffante parcourue par le courant traversant ce cycleur. La fonction du cycleur 47 est de limiter la priorité donnée au compartiment de réfrigération. Au lieu de le faire en se basant sur un réchauffement anormal du compartiment de congélation, on le fait en limitant volontairement le temps de marche effectué au profit du compartiment de réfrigération. Ceci est obtenu au moyen d'un cycleur 47 constitué par un interrupteur normalement fermé. Il comporte une bilame chauffée par une résistance traversée par le courant circulant dans le cycleur 47. Au bout d'un temps déterminé par les caractéristiques choisies de la bilame et de la résistance, le cycleur 47 coupe. Sa bilame se refroidit et referme le contact au bout d'un temps dépendant également des caractéristiques bilame-résistance.

Lorsque l'ensemble frigorifique 1 fonctionne normalement sans surcharge, on voit que le motocompresseur 3 démarre lorsque le compartiment de congélation 6 appelle du froid. En l'absence du cycleur 47, si le compartiment de réfrigération 5 appelle également du froid, le thermostat 46 est fermé, l'électro-vanne 15 ouverte et le froid est produit dans le compartiment de réfrigération 5. Lorsque celui-ci est satisfait, le thermostat 46 s'ouvre, ferme l'électro-vanne 15 et le froid est produit dans le compartiment de congélation 6 jusqu'à ce que celui-ci soit satisfait.

En présence du cycleur 47, en fonctionnement normal, la coupure effectuée par le thermostat 46 intervient avant celle effectuée par le cycleur 47.

Par contre, en cas de surcharge, le cycleur 47 intervient et répartit arbitrairement la production de froid entre les deux compartiments en fonction du rapport de marche fixé par les caractéristiques du cycleur 47. On évite donc par ce moyen les conséquences néfastes de la surcharge en abandonnant provisoirement la régulation indépendante et en repassant à une répartition arbitraire comme dans un réfrigérateur classique. Mais ceci est peu important, car il n'intervient qu'exceptionnellement.

Le cycleur 47 décrit, à fonctionnement thermique, convient bien pour cette application, car il revient automatiquement à sa position initiale lorsque le courant est coupé. Cependant des dispositifs à fonctions analogues à ce cycleur 47 tel qu'un interrupteur commandé par un dispositif de cyclage électronique ou tout autre moyen assurant le retour à l'état initial, peuvent être utilisés.

Les principales fonctions remplies par le circuit, c'est-à-dire le réglage indépendant de températures des compartiments, la marche accélérée du compartiment de congélation, la correction contre les surcharges thermiques temporaires, l'arrêt du compartiment de réfrigération seul, peuvent être également assurées par un dispositif électronique connu, comportant des sondes de températures, une dans chacun des compartiments de l'ensemble frigorifique 1. Ce dispositif électronique peut commander le démarrage du motocompresseur en fonction du besoin en froid de chacun des compartiments. Etant donné qu'un des compartiments peut appeler du froid alors que le motocompresseur vient d'être arrêté par l'autre compartiment, il est nécessaire dans ce cas d'adjoindre un dispositif retardateur de marche pour permettre l'équilibrage des pressions, ce qui est indispensable dans un circuit frigorifique à capillaire.

Ce dispositif électronique peut également assurer le fonctionnement avec des cycles plus courts, en égard aux impératifs de dégivrage du compartiment de réfrigération. Pour cela, il est bon de donner à la mise en marche du compresseur, la priorité au compartiment de réfrigération, la production de froid dans le compartiment basse température pouvant être assurée pendant que le réfrigérateur dégivre.

Ce dispositif électronique peut en outre assurer la répartition optimale des productions de froid entre les compartiments, en tenant compte des surcharges thermiques temporaires.

## Revendications

1. Ensemble frigorifique à compartiments à températures différentes contrôlées par des dispositifs thermostatiques indépendants, refroidis par un circuit frigorifique muni d'un seul motocompresseur avec deux évaporateurs, un pour chaque compartiment, et d'une électro-vanne qui, si elle se trouve dans un premier état (ouverte), assure le fonctionnement de l'évaporateur du premier compartiment et si elle est dans un second état (fermée), assure le fonctionnement du seul évaporateur du second compartiment, caractérisé en ce qu'il comporte un cycleur (47) de commande de l'électro-vanne (15) monté de façon telle qu'il fonctionne exclusivement lorsque simultanément les températures des deux compartiments sont trop élevées et que l'un des compartiments est en surcharge thermique, c'est-à-dire lorsque la durée de maintien de ce compartiment à température trop élevée dépasse un temps prédéterminé, et que l'électrovanne soit alternativement ouverte et fermée afin que les évaporateurs des premier et second compartiments fonctionnent alternativement et qu'ainsi ces compartiments soient refroidis simultanément.

2. Ensemble selon la revendication 1, caractérisé en ce que le cycleur comporte un interrupteur commandé par un dispositif de cyclage électronique.

3. Ensemble selon la revendication 1, caractérisé en ce que le cycleur est à fonctionnement thermique.

4. Ensemble selon la revendication 3, caractérisé en ce qu'il comporte une bilame chauffée par une résistance traversée par le courant circulant dans ledit cycleur.


**Patentansprüche**

1. Kühlgruppe mit Abteilen von verschiedener Temperatur, welche durch voneinander unabhängige Thermostatvorrichtungen gesteuert werden, wobei die Abteile durch einen Kühlkreis gekühlt werden, der mit einem einzigen Motor-Kompressor mit zwei Verdampfern, wobei ein Verdampfer für jedes Abteil vorgesehen ist, sowie mit einem Elektroventil versehen ist, welches in einem ersten Zustand (geöffnet) den Betrieb des ersten Abteils und in einem zweiten Zustand (geschlossen) den Betrieb nur des Verdampfers des zweiten Abteils gewährleistet, dadurch gekennzeichnet, daß sie eine Zyklussteuerung (47) des Elektroventils (15) umfaßt, die so geschaltet ist, daß sie ausschließlich in Funktion tritt, wenn gleichzeitig die Temperaturen der beiden Abteile zu hoch sind und eines der Abteile thermisch überlastet ist, d.h. wenn die Aufrechterhaltungsdauer dieses Abteils auf zu hoher Temperatur eine vorbestimmte Zeit überschreitet, und daß das Elektroventil wechselweise geöffnet und geschlossen wird, damit die Verdampfer des ersten und des zweiten Abteils wechlselweise arbeiten und so diese Abteile gleichzeitig gekühlt werden.

2. Gruppe nach Anspruch 1, dadurch gekennzeichnet, daß die Zyklussteuerung einen Unterbrecher umfaßt, der durch eine elektronische Zyklussteuerung gesteuert wird.

3. Gruppe nach Anspruch 1, dadurch gekennzeichnet, daß die Zyklussteuerung eine thermische Arbeitsweise hat.

4. Gruppe nach Anspruch 3, dadurch gekennzeichnet, daß sie ein Bimetall-Element umfaßt, das durch einen Widerstand beheizt wird, der von dem in der genannten Zyklussteuerung fließenden Strom durchquert wird.


**Claims**

1. A refrigerating assembly having compartments at different temperatures controlled by independent thermostatic devices, cooled by a refrigerating circuit provided with a single motor driven compressor with two evaporators, one for each compartment, and with a solenoid valve which, if it is in a first state (open), ensures operation of the evaporator of the first compartment and if it is in a second state (closed), ensures operation of a sole evaporator of the second compartment, characterized in that it comprises a cycle means (47) for the operation of the solenoid valve (15) arranged in such a manner that firstly it function solely when the temperatures of the two compartments are simultaneously excessively high and when one of the compartments is subject to a thermal excess charge, that is to say when the time during which this compartment is maintained at the excessively high temperature exceeds a certain predetermined time, that secondly the solenoid valve be alternatingly closed and opened so that the evaporators of the first and the second compartments operate alternatingly and thirdly that the said compartments are simultaneously cooled.

2. The assembly as claimed in claim 1, characterized in that the cycle means comprises a switch controlled by an electronic cycle operating means.

3. The assembly as claimed in claim 1, characterized in that the cycle means is designed to function thermally.

4. The assembly as claimed in claim 3, characterized in that it comprises a bimetal heated by a resistor conducting the current flowing in the said cycle means.

FIG. 1

EP 0 125 944 B1

# FIG.2